# EUROPEAN PATENT APPLICATION

(11) **EP 3 872 297 A1**
(43) Date of publication of application: **01.09.2021**
(21) Application number: 20159600.4
(22) Date of filing: 26.02.2020
(51) Int. Cl.: E21B 43/02, C09K 8/56

(54) **METHOD OF TREATING A SUBSURFACE PERMEABLE FORMATION WITH A RESIN**

(71) Applicant: Shell Internationale Research Maatschappij B.V., 2596 HR The Hague (NL)
(72) Inventor: CORNELISSEN, Erik Kerst, 1031HW Amsterdam (NL); LANGEDIJK, Gideon, 2288GS Rijswijk (NL)
(74) Representative: Shell Legal Services IP

(57) **Abstract**

A permeable subsurface earth formation is treated with a resin. Pores within the permeable formation contain formation fluid. An uncured resin is injected into these pores, thereby displacing part but not all of the formation fluid present in said pores. The resin is cured in the pores by allowing a chemical reaction between the resin and remaining formation fluid present in said pores.

## Description

### FIELD OF THE INVENTION

The present invention relates to a method of treating a subsurface permeable formation with a resin.

### BACKGROUND TO THE INVENTION

Sand control in hydrocarbon production industry refers to managing and/or minimizing sand and fines production during production of hydrocarbons (oil and/or gas) from subsurface Earth formations. Various methods of sand control and consolidation have been developed and applied in the past, but sand control is still considered to rank amongst the top technology challenges as various methods are quite expensive to apply. Such methods include completion methods, including valves or screens. Swellable packers have also been used for zonal isolation and water shut off.

A moisture curable urethane elastomer has been proposed in J. of Petroleum Technology Vol. 18(3), pp. 306-312 (March 1966), to consolidate formation sand in a tough rubbery matrix. A typical treatment consists of the injection of (1) a small value of kerosene or diesel oil to establish an injection rate, (2) a polyurethane solution, and (3) a diesel oil overflush to establish permeability. The polyurethane is catalyzed by the formation water, which extends the placement time.

A remaining challenge is to retain as much of the permeability of the formation as possible.

### SUMMARY OF THE INVENTION

In accordance with the present invention, there is provided a method of treating a permeable subsurface earth formation containing a formation fluid comprising formation water in pores within said permeable subsurface earth formation, comprising:
- selecting a borehole which extends into the permeable subsurface earth formation;
- selecting a zone within the borehole in open contact with the permeable subsurface earth formation;
- pumping a water-displacing preflush fluid into the selected zone thereby displacing formation water from the pores with the pre-flush fluid in a treatment volume of the formation except water that has physisorbed onto subsurface earth formation solids, said pre-flush fluid having a first viscosity;

- pumping an uncured water-curable resin into said selected zone and into said pores, thereby displacing the water-displacing preflush fluid present in said pores in said treatment volume, wherein said uncured resin has a second viscosity, which second viscosity is higher than the first viscosity;
- pumping a resin-displacing overflush fluid into said selected zone and into said pores, thereby displacing part but not all of the resin present in said pores in said treatment volume, wherein said overflush fluid has a third viscosity, which third viscosity is higher than the second viscosity.

As a result of said treating, one more properties, such as permeability, stability, and erodibility, of the permeable subsurface Earth formation may be modified.

### BRIEF DESCRIPTION OF THE DRAWINGS

The drawing figures depict one or more implementations in accord with the present teachings, by way of example only, not by way of limitation. In the figures, like reference numerals refer to the same or similar elements.
Fig. 1 schematically shows a wellbore after configuring an isolated selected zone in a wellbore;
Fig. 2 schematically shows the wellbore of Fig. 1 during application of the method; and
Fig. 3 schematically shows the wellbore of Fig. 1 after completion of the method.

### DETAILED DESCRIPTION OF THE INVENTION

The person skilled in the art will readily understand that, while the detailed description of the invention will be illustrated, making reference to one or more embodiments, each having specific combinations of features and measures, many of those features and measures can be equally or similarly applied independently in other embodiments or combinations. The drawings are illustrative only, and not to scale. All cited viscosity values are dynamic viscosity values as determined by the appropriate Brookfield test method at 25 °C. Given values are indicative.

Disclosed is a method of treating a subsurface permeable Earth formation with a resin. The target formation is accessible from the Earth surface via a borehole. As a result of said treating, one more properties of the permeable subsurface Earth formation may be modified. For sand consolidation, the purpose would be to bond sand particulates in the formation while preserving sufficient permeability for subsequent production of hydrocarbon formation fluids through the remaining pores. The present invention employs a preflush fluid to displace formation water, except for leaving behind water that has physisorbed onto the subsurface earth formation solids that are targeted to be consolidated. Subsequently, an uncured water-curable resin is forced into the formation. The resin preferentially cures starting at the interfaces with the formation solids that are to be consolidated, as that is where the remaining formation water from the preflush step is located. The resin essentially does not react with the preflush fluid in the pores, but a specific amount of time is selected before initiating the next step of injecting an overflush fluid, to allow the resin to react in close proximity to the grains of formation solids.

Subsequently, an overflush step wherein a resin-displacing overflush fluid is forced into the pores, whereby excess resin is dispersed further into the formation, away from the borehole. Herewith, some of the permeability of the formation is preserved (regained/restored) by avoiding the resin to fully cure and fill up the spaces of the pores. The overflush fluid preferably is inert in that it does not react with the uncured resin. By selecting one or more of the relative viscosities such that the viscosity of the successive fluids increases relative to the previous fluids, a good displacement and dispersion of the previous fluids present in the pores can be achieved.

Suitably, the viscosity of the uncured resin is higher than the viscosity of the preflush fluid, for example between 2x and 10x higher. This facilitates an effective displacement of a complete front of the preflush fluid with the resin. Similarly, the viscosity of the overflush fluid may be higher than the viscosity of the excess (uncured) resin. This facilitates an effective displacement of a complete front of the excess resin with the overflush fluid. For example, the viscosity of the overflush fluid may be between 2x and 20x higher than that of the uncured resin.

Preferably, the various viscosities are selected such that the viscosity of the overflush fluid does not have to exceed about 5 Pa·s. Typically, the uncured resin viscosity may be in the range of from 0.08 to 0.8 Pa·s.

Suitably, the viscosity of the preflush fluid is higher than that of the formation fluid which is originally present in the pores of the formation. The viscosity of a typical pre-flush fluid for a light oil well or a gas well may for example be between 0.01 and 0.1 Pa·s.

Only the physisorbed water remains and excess uncured resin is flushed away, which allows to create cured resin only in direct proximity of formation solid particulates. The permeability of the formation is thus retained as much as possible, while binding the formation solid particulates together in a matrix of cured resin. The time between injecting the resin and the overflush fluid is also of influence on how well the formation solids will be consolidated on one hand and how permeable the formation rock stays on the other hand.

The present invention uses water in the formation fluid, which is anyway present within the pores, as second component of the resin sealant system. An uncured component of the resin is injected or otherwise forced into the pores. The resin is cured in said pores by allowing a chemical reaction between the resin and remaining formation water which has physisorbed on the formation particulate that are targeted to be consolidated. The solidified resin material can consolidate formation particles and alter reservoir properties.

In the context of the present specification, each "component" of the resin sealant system may consist of a pure compound or comprise a mixture of compounds. The first component is usually a functional resin portion of the resin sealant system, whereas the second component is acts as hardener. The hardener is typically understood to be a separate ingredient that reacts with the functional resin portion of the first component. The compounds within one "component" generally do not react with each other, in absence of other molecules.

No pre-mixing of the first and second components is needed on site, at surface or before injecting. The resin can thus have a very long shelf-life, as long as contact with the formation fluid and other fluids which may contain the relevant reactive molecules (e.g. water or moisture) is prevented. No resin will cure prematurely as long as the formation fluids or fluids containing the relevant reactive molecules are kept away from the resin.

The resin will first start to cure subsequent to injection, as the second component is a formation fluid that is physisorbed on the surfaces of the pores into which the resin is injected. The new resin pumped or injected, or otherwise forced into the formation pores, will have a well-defined and predetermined viscosity before injecting.

Suitably the resin is injected into the formation from a wellbore. The wellbore may be well for an oil and/or gas, or a geothermal well application. The formation fluid may be a hydrocarbon fluid, such as oil or natural gas, an aqueous fluid, such as water or brine, and combinations thereof. Suitably, the resin which is injected is water-curable whereby the formation fluid comprises water (typically in the form of brine).

Water curable (or moisture curable) resins are commercially available. Known prior application of such resins is found in certain glues and coating systems (paints) such as moisture cure urethane coatings (MCU coatings). A suitable class of such water curable resins is based on isocyanates. Isocyanates are organic molecules that have an isocyanate group characterized by -N=C=O: for example R-N=C=O where R can be any group of atoms or any (organic) side chain of any length. The organic molecules suitably comprise multiple functional isocyanate groups, such as di-isocyanates. A well-known example of a di-isocyanate is methylene diphenyl di-isocyanate (MDI). Such isocyanates chemically react with active hydrogen atoms which can be provided in alcohols, amines, amides, ureum, and also water. Under reaction with water, the iso-cyanates react and form both polymer molecules as well as ureum cross links between successive polymer molecules thus forming a three-dimensional network that can have excellent sand particulate bonding properties. The amount of carbon dioxide formed during the reaction is sufficiently small to not cause problems or leak paths.

An example of a suitable water curable resin comprises an isomeric mixture of toluene-2,4-diisocyanate and toluene-2,6-diisocyanate, as disclosed in J. of Petroleum Technology Vol. 18(3), pp. 306-312 (March 1966). Another example is polyurethane injection resin commercially available under the name "SpeTec ®" from Koramic Construction Chemicals, Wommelgem, Belgium. SpeTec ® Soil H40 is a single component resin which comprises an accelerator which can be pre-mixed. SpeTech ® Soil H40 contains 4,4'-methylenediphenyl diisocyanate, propylenecarbonate, and difenylmethane-4,4'-diisocyanate and it has a dynamic viscosity of about 100 mPa.s at 25 °C as determined by Brookfield SP3 - 200 tr/min test. The accelerator contains 2,2-dimorfolino diethylether.

An alternative resin has been proposed in US Patent 9,840,655, which comprises a hardenable acid curable resin and a hydrolysable dimer acid ester. Upon contacting of the unconsolidated particles with the reaction product of the hardenable acid curable resin, hydrolysable acid ester and water in the formation, the particulates are consolidated.

The formation of the three-dimensional network is facilitated by displacing a majority of the formation fluid from the pores of the formation which is to be treated with a preflush fluid. Herewith the chemical reaction can take place in a condition where there is excess resin during said chemical reaction compared to the formation fluid. Excess resin molecules are then forced to react with themselves rather than only with the formation fluid.

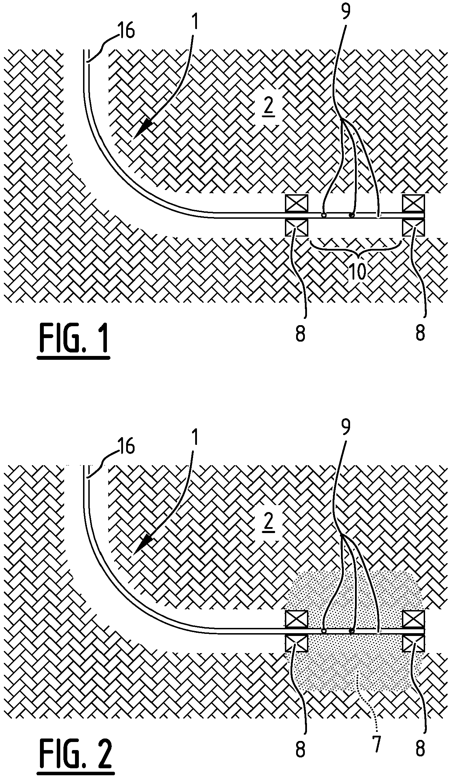

Fig. 1 schematically shows a cross sectional view of a so-called open borehole 1 in a formation rock 2 in the Earth. In an open borehole, the formation rock is directly exposed to the borehole 1. To accomplish resin injection, an injection string 16 may be run into the borehole 1. Resin injection strings can be run on a (coiled) tubing or in any other suitable manner. In the embodiment as shown, the injection string 16 is provided with a set of straddle packers 8 to isolate a selected zone 10 from the remainder of the borehole. The straddle packers 8 may comprise inflatable packers. Various straddle systems, such as for example TAM International's PosiFrac ™ straddle system or Schlumberger's ACTive Straddle system, are known and commercially available in the industry. The injection string 16 may comprise coiled tubing. Ports 9 are provided in the zone between the straddle packers 8 through which fluids can be injected from the string into the selected zone 10. Prior to setting the packers 8 and isolating the selected zone 10, the borehole 1 may suitably contain a completion fluid.

As shown in Fig. 2, the uncured resin 7 is injected into the pores of the formation rock 2. Most of the fluid that was present in the pores (suitably a preflush fluid) may be displaced by and/or thereby be driven out by the resin 7. The resin 7 is cured by allowing a chemical reaction between the resin 7 water that has physisorbed on the formation particulates.

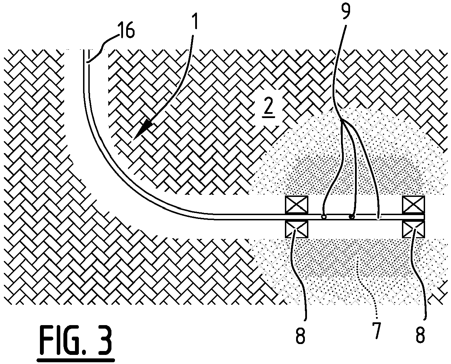

Fig. 3 shows the borehole 1 with the treated zone after a post-flush step. An inert fluid (water free, e.g. oil) has been applied to wash the treatment zone and drive out excess resin prior to curing, thereby preserving or restoring permeability of the formation. The end result is a permeable medium of resin-consolidated solids. Subsequently to the postflush step, the packers 8 can be collapsed and the injection string can be pulled up.

The various fluids that are injected into the selected zone 10 can be pumped in a sequence of volumes one after another, separated by darts. The darts are suitably configured with a rupture disk, so that a number of darts can be run in a train having different fluid slugs between them.

A laboratory test was done wherein a polyurethane resin was injected into a cuvette containing a sample of unconsolidated (loose) packed sand grains saturated with water. The resin was injected, thereby displacing most of the water. However, as the water wetted the surfaces of the sand particles, that is where the resin cured during injection with resident remaining water. Subsequent to injecting the resin, the sample was post-flushed with oil. The resulting sample consisted out of porous permeable consolidated sand.

The herein proposed sand control methods can be applied to hydrocarbon producing wells, as well as other types of wells such as geothermal wells.

The person skilled in the art will understand that the present invention can be carried out in many various ways without departing from the scope of the appended claims.

## Claims

1. A method of treating a permeable subsurface earth formation containing a formation fluid comprising formation water in pores within said permeable subsurface earth formation, comprising:
- selecting a borehole which extends into the permeable subsurface earth formation;
- selecting a zone within the borehole in open contact with the permeable subsurface earth formation;
- pumping a water-displacing preflush fluid into the selected zone thereby displacing formation water from the pores with the pre-flush fluid in a treatment volume of the formation except water that has physisorbed onto subsurface earth formation solids, said pre-flush fluid having a first viscosity;
- pumping an uncured water-curable resin into said selected zone and into said pores, thereby displacing the water-displacing preflush fluid present in said pores in said treatment volume, wherein said uncured resin has a second viscosity, which second viscosity is higher than the first viscosity;
- pumping a resin-displacing overflush fluid into said selected zone and into said pores, thereby displacing part but not all of the resin present in said pores in said treatment volume, wherein said overflush fluid has a third viscosity, which third viscosity is higher than the second viscosity.

2. The method of claim 1, wherein the second viscosity is at least 2x higher than the first viscosity.

3. The method of claim 2, wherein the second viscosity is at most 10x higher than the first viscosity.

4. The method of any one of the preceding claims, wherein the third viscosity is at least 2x higher than the second viscosity.

5. The method of claim 4, wherein the third viscosity is at most 20x higher than the second viscosity.

6. The method of any one of the previous claims wherein the first viscosity is higher than that of the formation fluid.

7. The method of any one of the preceding claims, wherein the first viscosity is within a range of from 0.01 Pa·s to 0.1 Pa·s.

8. The method of any one of the preceding claims, further comprising isolating the selected zone from a remainder of the borehole during or prior to pumping the water-displacing preflush fluid into said selected zone.

9. The method of claim 8, further comprising displacing a completion fluid from the selected zone by said water-displacing preflush fluid.

10. The method of any one of the preceding claims, wherein the resin comprises an isocyanate.
